# FASCICULE DE BREVET EUROPEEN

(11) **EP 2 575 050 B1**
(45) Date de publication et mention de la délivrance du brevet: **06.06.2018**
(21) Numéro de dépôt: 12180780.4
(22) Date de dépôt: 17.08.2012
(51) Int. Cl.: G06F 13/38, G06F 21/62

(54) **Procédé de communication avec une entité électronique portable**
Kommunikationsverfahren mit einer tragbaren elekronischen Einheit
Method for communicating with a portable electronic entity

(30) Priorité: 28.09.2011 FR 1158694
(43) Date de publication de la demande: 03.04.2013
(73) Titulaire: IDEMIA France, 92700 Colombes (FR)
(72) Inventeur: Morin, Nicolas, 92000 Nanterre (FR); Greneche, Hugo, 92000 Nanterre (FR)
(74) Mandataire: Lefevre-Groboillot, David André

(56) Documents cités:
- FR-A1- 2 926 652
- USB-IMPLEMENTERS FORUM INC ': "Universal Serial Bus Specification - Revision 2.0", UNIVERSAL SERIAL BUS SPECIFICATION, XX, XX, 27 avril 2000 (2000-04-27), pages 118-170, XP002169502,
- USB IMPLEMENTERS FORUM: "Universal Serial Bus Specification Revision 2.0 - Chapters 1 - 5 and 9", INTERNET CITATION, 27 avril 2000 (2000-04-27), XP002412161, Extrait de l'Internet: URL:http://www.usb.org/developers/docs/usb _20_05122006.zip [extrait le 2006-12-19]

## Description

### Domaine technique et art antérieur

L'invention s'inscrit dans le domaine du matériel et des programmes informatiques pour la communication avec des entités électroniques portables comprenant un microcontrôleur, telles que les cartes à microcircuit, les cartes mémoire ou les dispositifs de stockage USB. En particulier, mais pas exclusivement, l'invention concerne le matériel et les programmes permettant le développement et la caractérisation de solutions sécurisées en matière d'entités portables, par exemple pour l'identification personnelle ou les transactions d'argent.

Les entités portables de type cartes à microcircuit contiennent couramment des informations privées, souvent cryptées. Ces entités portables sont l'objet d'attaques par des fraudeurs souhaitant s'approprier illicitement ces informations privées. De telles attaques peuvent consister en l'analyse d'informations provenant de l'entité portable sans affecter son intégrité physique (attaques non-invasives ou semi-invasives). Parmi ces attaques faiblement invasives, certaines sont passives et consistent en une observation de l'activité du composant résultant de l'utilisation normale de l'entité par son propriétaire, et d'autres sont actives, et sont par exemple basées sur la l'injection de fautes qui peuvent aboutir à l'envoi depuis l'entité attaquée d'un flot d'informations frauduleux.

Celles-ci consistent à chercher à provoquer un comportement anormal du microcontrôleur contenu dans le microcircuit, dans le but de lui faire transmettre vers l'extérieur des informations secrètes, comme une clé de chiffrement. Cela est obtenu en transmettant au microcontrôleur, via un lecteur adapté, des commandes telles que les commandes relatives à une transaction bancaire, tout en faisant subir à l'entité portable une variation de son environnement physique (typiquement par un rayonnement ponctuel dirigé à la surface d'un de ses composants) ou de son alimentation électrique, de nature à introduire une ou plusieurs erreurs dans ses mémoires et circuits. On récupère ensuite les données que le microcontrôleur émet en réaction à la commande. Ces données sont enfin analysées, et statistiquement, on sait que certaines d'entre elles, en petits nombres, éventuellement combinées entre elles, peuvent constituer des informations critiques, qui n'auraient pas dû être divulguées par le circuit.

Lors de la conception et du développement des entités portables, notamment les cartes à microcircuit, celles-ci sont testées pour connaître leur résistance à ces attaques par injection de fautes. On parle ainsi d'un processus de caractérisation sécuritaire du produit, visant à démontrer que le produit satisfait certains critères, par exemple normatifs, et est fiable. Ce processus s'effectue avec une application de test mise en oeuvre sur un ordinateur et une interface, par exemple un lecteur de carte, relié à cet ordinateur et fonctionnant en mode « transparent », c'est-à-dire renvoyant à l'application l'ensemble des données émises par l'entité portable.

En matière de cartes à microcircuit, un tel mode « transparent » de fonctionnement d'un lecteur diffère du mode « standard » des lecteurs commerciaux simples fonctionnant suivant le protocole ISO 7816-3, et qui ne transmettent à l'application ou à l'ordinateur qui les utilise que les données émises par le microcircuit conformément au protocole ISO 7816-3, adoptant ainsi un rôle de filtre permanent. Ce mode n'est pas adapté aux processus de caractérisation sécuritaire des cartes ou aux processus de débogage, car l'utilisateur n'a pas accès à toutes les informations émises par la carte, du fait du filtrage. En particulier, dans le cas d'une attaque par injection de faute, la réponse émise par le microcircuit peut ne pas être conforme au protocole ISO 7816-3, parce que la longueur de la réponse ou l'acquittement ne sont pas corrects. Ainsi, si le lecteur remplit son rôle de filtrage dans le mode « standard », la caractérisation est difficile à effectuer faute d'informations récupérées.

Par ailleurs, l'efficacité des processus de caractérisation sécuritaire est limitée par le temps nécessaire pour effectuer les injections de faute (simultanément à l'introduction d'une commande) et récupérer les données émises, étant donné qu'il est nécessaire, statistiquement, d'analyser un grand nombre de réactions du microcontrôleur d'une entité électronique portable pour observer les éventuelles failles sécuritaires. Or, toujours en matière de cartes à microcircuit, le mode « transparent » de fonctionnement d'un lecteur de carte est un mode particulièrement lent en toutes circonstances, car il utilise la vitesse minimale de communication des cartes à microcircuit, indépendamment des capacités du lecteur utilisé et des capacités de la carte étudiée. Il en résulte que les processus de caractérisation sécuritaire sont lents et par conséquent coûteux.

Le document EP 1486909 aborde le problème de la longueur et du coût des tests de cartes à microcircuit comportant des fonctions multiples. Il divulgue une carte comprenant un contrôleur de test JTAG et un automate à états finis, et utilise un système à deux modes : d'une part un mode de test et d'autre part un mode normal. Le mode de test est implémenté à l'aide de paquets de données VSR, la carte intégrant de nombreux composants. Ainsi, seule une carte spécifiquement développée peut être testée avec la méthode ainsi présentée dans ce document.

Il existe donc un besoin en matière de procédé permettant une communication efficace avec toute sorte d'entités électroniques portables, pour la commande ou la caractérisation de celles-ci par le biais d'une application informatique fonctionnant sur un ordinateur.

### Résumé de l'invention

L'invention vise à remédier à cet inconvénient, et à cette fin propose un procédé de communication entre une entité électronique portable et une application informatique exécutée par un hôte par l'intermédiaire d'une interface, comprenant une étape d'initialisation de la communication, puis une étape d'échange de données entre l'entité électronique portable et l'application, caractérisé en ce qu'au cours de l'étape d'échange de données, l'interface transmet à l'application des données qu'elle reçoit en provenance de l'entité électronique portable indépendamment de leur conformité à une norme de communication entre l'entité électronique portable et l'interface, et en ce qu'au cours de l'étape d'initialisation, il est procédé entre l'entité électronique portable et l'interface, si l'entité électronique portable le permet, à une négociation d'une vitesse de communication supérieure à une vitesse de communication minimale, une transmission de données entre l'entité électronique portable et l'interface étant ensuite effectuée, au cours de l'étape d'échange de données, à la vitesse issue de ladite négociation.

Ce procédé trouve son application dans tout système de commande ou caractérisation d'une entité électronique portable. Il permet de communiquer rapidement avec l'entité électronique portable, tout en récupérant toutes les informations émises par l'entité.

En particulier, ce procédé permet à un opérateur effectuant une caractérisation sécuritaire de l'entité électronique portable de pousser sa caractérisation plus loin qu'avec les procédé de communication de l'art antérieur, car le nombre des commandes qui peuvent être envoyées en un temps de travail donné est augmenté, ce qui permet d'agrandir l'échantillon statistique de réponses de l'entité électronique portable qui est étudié.

Ce procédé de communication peut être utilisé dans d'autres applications, par exemple le débogage d'un logiciel embarqué du microcontrôleur.

Dans un mode de réalisation particulier, ladite négociation entre l'entité électronique portable et l'interface est une sélection de protocoles et paramètres conforme à une norme. Ainsi, cette négociation est facile à implémenter.

Dans différentes applications, l'entité électronique portable est une carte à microcircuit, une carte mémoire, par exemple une carte SD, ou une clef USB.

L'invention propose aussi un procédé de caractérisation sécuritaire d'une entité électronique portable comprenant une communication selon le procédé présenté. La caractérisation peut comprendre une attaque par injection de fautes, et/ou, précisément l'envoi par l'interface à l'entité électronique portable d'une commande d'exécution d'un algorithme de cryptographie asymétrique, par exemple une commande RSA de longueur 1024 bits, ou d'une autre longueur.

L'invention propose aussi une entité électronique portable ayant fait l'objet d'une caractérisation sécuritaire selon le procédé ainsi défini.

Selon un autre aspect de l'invention, il est aussi proposé un lecteur d'entité électronique portable, disposant d'un mode de fonctionnement dans lequel il effectue, en réaction à une demande d'une application informatique, une étape d'initialisation de communication avec l'entité électronique portable, puis une étape d'échange de données entre l'entité électronique portable et l'application informatique, caractérisé en ce qu'au cours de l'étape d'échange de données le lecteur transmet à l'application des données qu'il reçoit de l'entité électronique portable indépendamment de leur conformité à une norme de communication entre l'entité électronique portable et le lecteur, et en ce que dans ledit mode, il est procédé entre l'entité électronique portable et le lecteur, au cours de l'étape d'initialisation et si l'entité électronique portable le permet, à une négociation d'une vitesse de communication, une transmission de données entre l'entité électronique portable et le lecteur étant ensuite effectuée, au cours de l'étape d'échange de données, à la vitesse issue de ladite négociation.

Selon un mode de réalisation, la valeur d'une variable enregistrée dans le lecteur détermine si le lecteur fonctionne ou non dans ledit mode. La variable peut notamment être enregistrée dans un micro-logiciel du lecteur. Enfin, un lecteur de carte à microcircuit constitue un mode de réalisation particulièrement intéressant de l'invention.

Selon encore un autre aspect de l'invention, il est proposé un programme informatique pouvant être chargé sur un appareil programmable et permettant alors une communication entre ledit appareil programmable et une entité électronique portable telle qu'une carte à microcircuit, comportant une série d'instructions qui permettent à la communication d'être effectuée dans un mode dans lequel il est effectué, en réaction à une demande d'une application informatique, une étape d'initialisation de communication avec l'entité électronique portable, puis une étape d'échange de données entre l'entité électronique portable et l'application informatique, caractérisé en ce qu'au cours de l'étape d'échange de données, des données reçues de l'entité électronique portable sont transmises à l'application indépendamment de leur conformité à une norme de communication entre l'entité électronique portable et l'appareil programmable, en ce que dans ledit mode, il est procédé, au cours de l'étape d'initialisation et si l'entité électronique portable le permet, à une négociation d'une vitesse de communication, une transmission de données entre l'entité électronique portable et l'appareil programmable étant ensuite effectuée, au cours de l'étape d'échange de données, à la vitesse issue de ladite négociation.

Avantageusement, la série d'instructions permet également la mémorisation par l'appareil programmable d'une variable dont la valeur détermine si la communication se fait ou non dans ledit mode.

Enfin, le programme informatique peut être un pilote de lecteur ou de port et, par ailleurs être avantageusement programmé via une interface de programmation pour que la communication puisse se faire suivant ledit mode.

Selon un dernier aspect de l'invention, celle-ci consiste en une application informatique apte à communiquer, quand elle est mise en oeuvre sur un dispositif programmable, avec une entité électronique portable via une interface, caractérisée en ce qu'elle comprend des instructions pour l'envoi à l'interface d'une mise à jour d'au moins une variable dont la valeur détermine si la communication se fait selon le procédé défini précédemment. La variable peut être booléenne et chacun de ses états définit un mode de communication, parmi lesquels un mode de communication utilisant le procédé de communication défini précédemment. L'application informatique dispose avantageusement d'une interface homme-machine.

### Brève description des figures

La figure 1 présente un procédé de communication selon la norme ISO 7816-3, faisant partie de l'art antérieur.
La figure 2 présente un autre procédé de communication selon l'art antérieur.
La figure 3 présente un procédé de communication selon un mode général de réalisation de l'invention.
Les figures 4 à 6 présentent le fonctionnement d'un lecteur de carte à microcircuit selon un mode particulier de réalisation de l'invention, pendant les phases de mise à jour de paramètres, d'initialisation puis d'échange, respectivement.
Les figures 7 à 9 présentent le fonctionnement d'un lecteur de carte à microcircuit selon un deuxième mode particulier de réalisation de l'invention, pendant les phases de mise à jour de paramètres, d'initialisation puis d'échange, respectivement.

### Exposé détaillé de l'invention

On va maintenant décrire l'invention après avoir évoqué des modes de communication selon l'art antérieur.

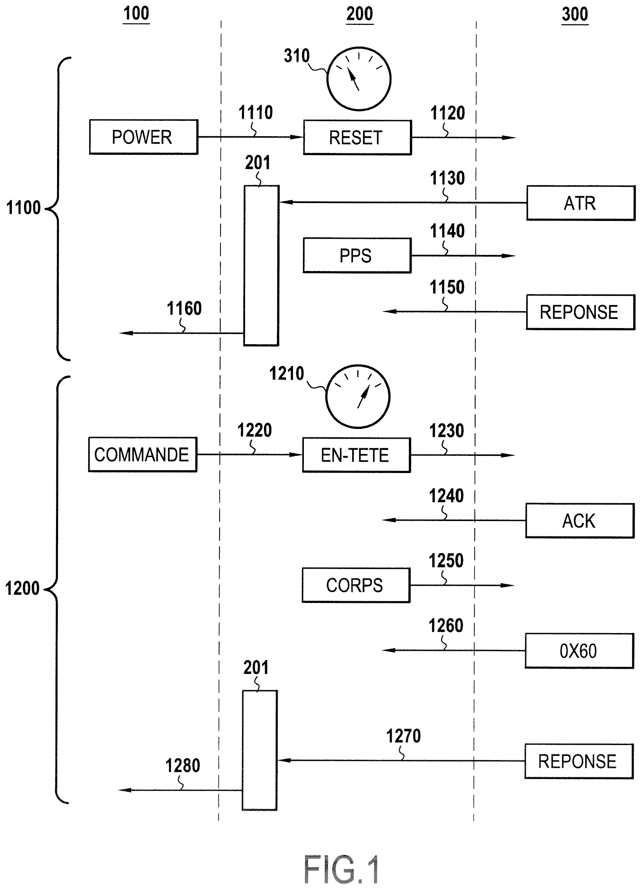

En figure 1, on a représenté un procédé de communication conforme à la norme ISO 7816-3, tel qu'utilisé dans un lecteur de carte à puce commercial.

Ce procédé de communication est mis en oeuvre entre une application informatique 100, par exemple l'application PCOM, exécutée par un ordinateur du type PC, et une carte à microcircuit 300, via un lecteur de carte 200. L'ordinateur constitue une station hôte pour la carte. L'application PCOM permet à un utilisateur de l'ordinateur, à l'aide d'une interface homme-machine, d'envoyer des commandes selon la norme ISO 7816-3, ainsi que de collecter des réponses à commande en provenance d'un lecteur de carte installé sur l'ordinateur. Le procédé de communication comprend deux phases : tout d'abord une phase d'initialisation de la communication 1100, puis une phase d'échange de données 1200 entre la carte 300 et l'application 100.

La phase d'initialisation 1100 comprend plusieurs étapes. Elle débute par une étape de commande de mise sous tension 1110 effectuée par l'application informatique 100. Cette étape 1110 consiste pour l'application 100 à envoyer une commande de mise sous tension d'une carte à microcircuit au lecteur 200. Cette étape est suivie d'une étape de commande de réinitialisation 1120, effectuée par le lecteur 200. Cette étape 1120 consiste, pour le lecteur 200, à envoyer une commande de réinitialisation à la carte 300.

En réaction à la commande de réinitialisation qu'elle a reçue, la carte 300 effectue une étape de réponse 1130 (notée ATR pour « *Answer To Reset* »). Cette réponse est constituée d'une suite d'octets « ATR », dans laquelle un octet indique si la carte 300 est adaptée à communiquer avec un lecteur de manière accélérée par rapport à la vitesse minimale de communication des cartes à microcircuit, vitesse qui est par la suite notée 310. L'étape de réponse 1130 est constituée par le transfert de la suite d'octets évoquée de la carte 300 au lecteur 200. La suite d'octets « ATR » est introduite dans une mémoire tampon 201 du lecteur 200, et parallèlement, celui-ci analyse cette suite d'octets pour savoir si la carte est adaptée à utiliser une vitesse de communication accélérée.

Dans le cas où la carte 300 au cours de l'étape de réponse 1130 indique qu'elle est adaptée à utiliser une vitesse de communication accélérée, l'étape de réponse 1130 est suivie d'étapes de négociation 1140 et 1150 constituant un dialogue entre le lecteur 200 et la carte 300, connu sous l'acronyme PPS (pour « *Protocole and Parameter Selection* »). A l'issue de ces étapes de négociation 1140 et 1150, une vitesse de communication 1210 est choisie de manière commune par le lecteur 200 et la carte 300, qui la mémorisent. La suite d'octets « ATR » est ensuite transmise de la mémoire tampon 201 à l'application 100, au cours d'une étape 1160.

La phase d'échange de données 1200 débute alors, après la réception par l'application 100 de la suite d'octets « ATR ». L'application 100 envoie tout d'abord une commande au lecteur 200, au cours d'une étape de commande 1220.

En réaction à la réception de la commande au cours de l'étape 1220, le lecteur 200 analyse le contenu de la commande et envoie l'en-tête de celle-ci à la carte 300 au cours d'une étape d'envoi d'en-tête 1230. En réaction à la réception de cet en-tête, la carte 300 émet un message d'acquittement à l'intention du lecteur 200, au cours d'une étape d'acquittement 1240. En réaction à cet acquittement, le lecteur 200 envoie le corps de la commande à la carte 300, au cours d'une étape d'envoi du corps 1250. Néanmoins, si le lecteur 200 s'aperçoit que l'acquittement transféré au cours de l'étape 1240 est erroné, au lieu d'effectuer l'étape d'envoi du corps 1250, le lecteur 200 bascule en position erreur.

Après la réception du corps de la commande 300, la carte 300 traite la commande, et conformément au protocole défini dans la norme ISO 787-3, si le traitement de la commande est d'une durée importante, la carte 300 transmet au lecteur 200, au cours d'une étape 1260, des octets qualifiés d'octets de protocole et notés « 0X60 ». Enfin, quand la carte 300 a achevé le traitement de la commande, elle émet une réponse au cours d'une étape d'émission de réponse à commande 1270. Cette réponse à commande est introduite dans la mémoire tampon 201. Une fois qu'il a reçu un nombre d'octets correspondant à une réponse suivant la norme ISO 7816-3, le lecteur 200 analyse la réponse et ne la transmet à l'application 100, au cours d'une étape 1280, que si cette réponse est conforme à la norme ISO 7816-3. Dans le cas contraire, le lecteur 200 bascule en position erreur. C'est aussi le cas si la réponse a une longueur non conforme à la norme. Dans cette hypothèse, l'application 100 ne récupère aucune des données transmises par la carte 300 au cours de l'étape 1270.

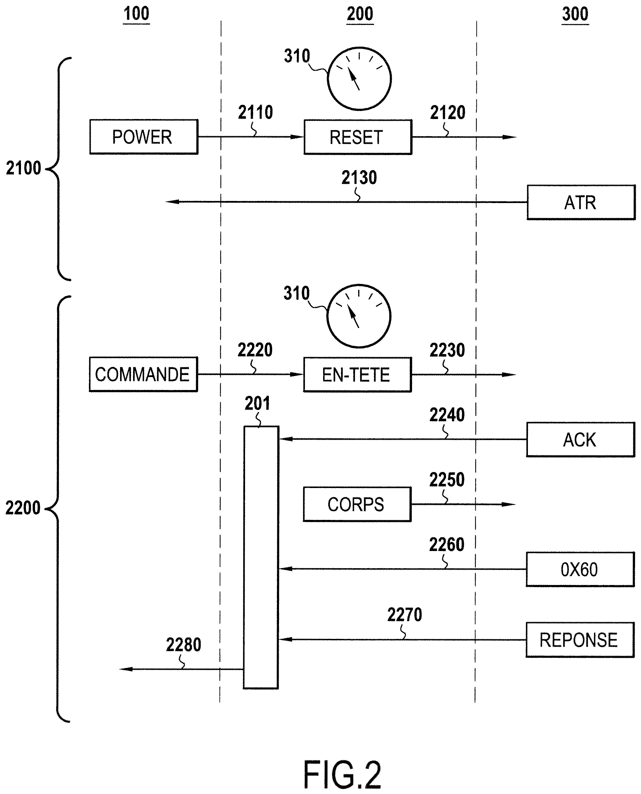

On va maintenant décrire, en relation avec la figure 2 un procédé de communication selon un mode qualifié de mode transparent.

La communication est établie comme précédemment entre une application 100 et une carte à microcircuit 300, via un lecteur de carte 200. La communication s'établit sous la forme d'une succession de deux phases, à savoir une phase d'initialisation 2100 puis une phase d'échange de données 2200.

La phase d'initialisation 2100 débute par une étape de commande de mise sous tension 2110 au cours de laquelle une commande de mise sous tension est transmise de l'application 100 au lecteur 200. Celui-ci, en réaction, effectue une étape de commande de réinitialisation 2120, au cours de laquelle il transmet à la carte 300 une commande de réinitialisation. En réaction à la réception de celle-ci, la carte 300 émet une succession d'octets qualifiée de réponse à réinitialisation (« ATR »). Cette réponse à réinitialisation est transmise de la carte 300 au lecteur 200 au cours d'une étape 2130, et dans le mode de communication transparent, le lecteur 200 n'examine pas le contenu de cette réponse et transmet l'intégralité de celle-ci directement à l'application 100. On note à ce stade que la phase d'initialisation 2100 s'arrête ainsi, aucune négociation de paramètres et de protocole n'étant mise en oeuvre entre la carte 300 et le lecteur 200.

La phase d'échange de données 2200 débute alors, après la réception par l'application de la réponse « ATR ». Elle se déroule avec la vitesse de communication minimale des cartes à puce 310. En effet, comme indiqué précédemment, aucune vitesse accélérée n'a été négociée entre la carte 300 et le lecteur 200.

La phase d'échange de données 2200 débute par une étape de commande effectuée par l'application 100. Au cours de cette étape 2220, une commande est adressée par l'application 100 à destination du lecteur 200. En réaction à la réception de cette commande, le lecteur 200 effectue tout d'abord une étape d'envoi d'en-tête 2230 à destination de la carte 300. En réaction à la réception de cet en-tête, la carte 300 effectue une étape d'envoi d'un acquittement 2240 à destination du lecteur 200. Le lecteur 200 n'analyse pas cet acquittement, et l'introduit dans une mémoire tampon 201. Dès que le lecteur 200 a reçu un octet d'acquittement, indépendamment de la valeur de cet octet, il envoie le corps de la commande à la carte 300, au cours d'une étape d'envoi du corps 2250. Le lecteur 200 se met alors en attente de données.

La carte 300 effectue ensuite le traitement de la commande qu'elle a reçue. Comme précédemment, si ce traitement est particulièrement long, la carte 300 émet des octets de protocole, noté « 0X60 », tels que défini par la norme ISO 7816-3, au cours d'une étape d'envoi d'octets de protocole 2260. Le lecteur 200, fonctionnant en mode transparent, n'effectue aucun travail d'analyse ou de filtre sur ces octets de protocole et les introduit dans la mémoire tampon 201 en attendant le reste des données.

Enfin, quand la carte 300 a fini son travail d'analyse et d'exécution de la commande, elle transmet sa réponse au lecteur 200 au cours d'une étape de réponse à commande 2270. Le lecteur 200, fonctionnant en mode transparent, n'effectue aucune analyse ou filtre de la réponse ainsi reçue, et l'introduit dans une mémoire tampon. Une fois qu'une période dite de « time-out », paramétrable, s'est écoulée et qu'au cours de celle-ci le lecteur 200 n'a rien reçu de la carte 300, le lecteur 200 transmet l'intégralité du contenu de la mémoire tampon 201 à l'application 100.

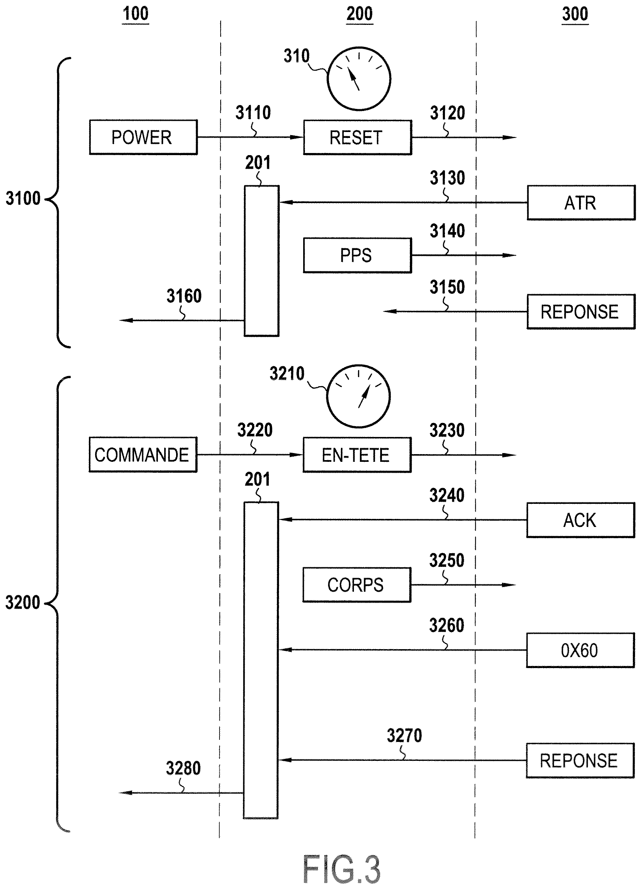

On va maintenant décrire un mode général de réalisation d'un procédé de communication suivant l'invention. Ce procédé de communication est représenté en figure 3, et se décompose entre une phase d'initialisation 3100 et une phase d'échange de données 3200. La communication est établie entre une application 100 et une carte 300, via un lecteur 200.

Le procédé commence par une étape de commande de mise sous tension effectuée par l'application 100. Cette étape, notée 3110, comprend la transmission par l'application 100 d'une commande de mise sous tension au lecteur 200. Celui-ci, en réaction à la réception de cette commande initialise sa communication avec la carte 300. Au début de cette communication, la vitesse de communication entre le lecteur 200 et la carte 300 est égale à la valeur de vitesse minimale 310 des cartes à microcircuit. En réaction à la réception de la commande de mise sous tension, le lecteur 200 émet à destination de la carte 300 une commande de réinitialisation, au cours d'une étape 3120.

La carte 300, recevant cette commande de réinitialisation, y répond par une étape 3130 de réponse à la commande de réinitialisation (« ATR »). Comme expliqué précédemment, cette réponse est d'une part introduite dans une mémoire tampon 201, et d'autre part, analysée par le lecteur 200 qui recherche l'information, codée sous forme d'un octet, qui indique si la carte est adaptée à ce que la communication avec un lecteur soit accélérée par rapport à la vitesse minimale 310. Dans le cas où la carte 300 a effectivement indiquée que la vitesse de communication pouvait être accélérée, le lecteur engage, avec la carte 300, un processus de négociation de paramètres constitué des étapes de négociation 3140 et 3150. Au cours de ce processus de négociation, le lecteur indique à la carte sa vitesse de communication à elle, la carte lui répond en lui indiquant sa propre vitesse de communication et le lecteur modifie sa vitesse effective de communication, pour la porter à une valeur négociée notée 3210. La réponse « ATR » est transmise à l'application 100 à l'issue de la négociation.

En réaction à la réception de la réponse « ATR », la phase d'échange de données 3200 est ensuite débutée par l'envoi par l'application 100 d'une commande, au cours d'une étape de commande 3220. La commande est reçue par le lecteur 200. Celui-ci en réaction à la réception de la commande émet, au cours d'une étape d'envoi d'en-tête 3330 un message comprenant l'en-tête de la commande reçue à destination de la carte 300. En réaction à la réception de cet en-tête, la carte 300 envoi un acquittement à destination du lecteur 200, au cours d'une étape d'acquittement 3240. Le lecteur 200 n'analyse pas cet acquittement, l'introduit dans la mémoire tampon 201, et, en réaction à la réception d'un octet d'acquittement, indépendamment de la valeur de celui-ci, envoi le corps de la commande au cours d'une étape d'envoi du corps 3250. La carte 300 reçoit le corps de la commande et débute le traitement de celle-ci.

Si le traitement de la commande prend un temps particulièrement long, conformément au protocole défini dans la norme ISO 7816-3, la carte 300 émet à destination du lecteur 200 des octets de protocole (« 0X60 »). Dans ce mode de réalisation, conformément à l'invention, le lecteur 200 n'analyse pas les octets de protocole et les introduit dans la mémoire tampon 201.

Une fois la commande traitée par la carte 300, celle-ci envoie sa réponse à destination du lecteur 200, au cours d'une étape d'émission de réponse à commande 3270. Conformément à l'invention, le lecteur 200 n'analyse pas cette réponse et l'introduit dans la mémoire tampon 201. Une fois qu'une période dite de « time-out », paramétrable, s'est écoulée, et qu'au cours de celle-ci le lecteur 200 n'a rien reçu de la carte 300, le lecteur 200 transmet l'intégralité du contenu de la mémoire tampon 201 à l'application 100.

On précise de plus que dans le mode de réalisation présenté, le lecteur et son pilote n'analysent pas non plus les commandes transmises par l'application, et les transmettent directement à la carte, sans filtre. Néanmoins, dans une variante, les commandes pourraient être analysées et filtrées avant d'être transmises à la carte.

Dans le mode de réalisation qui a été décrit, toutes les données reçues en provenance de la carte par le lecteur pendant la phase d'échange de données, considérée comme unique phase d'échange de données, sont transmises à l'application.

Dans une variante, la phase d'échange de données est remplacée par plusieurs phases d'échange de données, et selon l'invention, toutes les données reçues en provenance de la carte par le lecteur pendant l'une des phases d'échange de données sont transmises à l'application. Par exemple, les étapes 3230 et 3240 constituent une première phase d'échange de données, qui n'est pas effectuée en mode transparent, puis les étapes 3250, 3260 et 3270 constituent une deuxième phase d'échange de données, qui est, elle, effectuée en mode transparent.

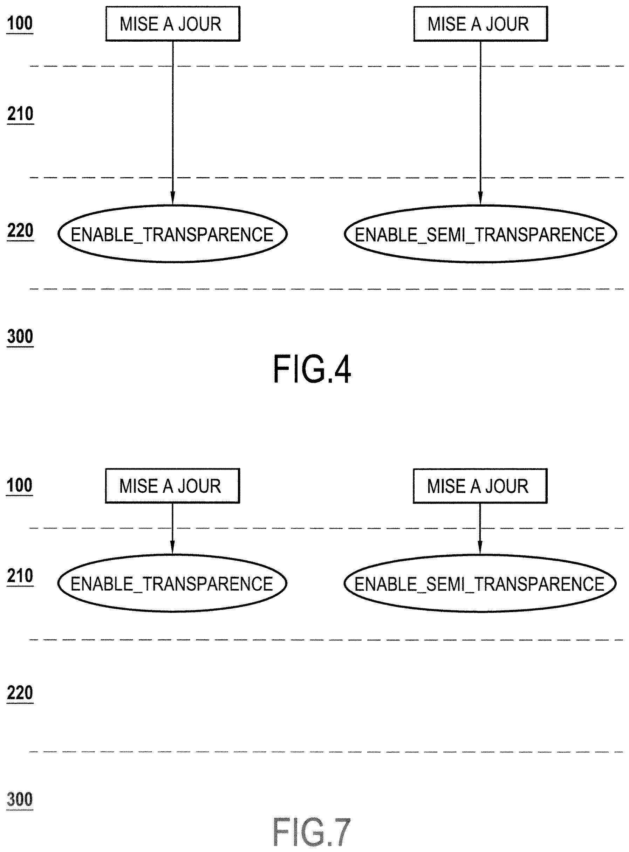

On va maintenant décrire, en référence aux figures 4 à 6, un mode particulier d'implémentation d'un procédé de communication selon l'invention, sur un lecteur de carte à microcircuits dont le micro-logiciel (« *firmware* ») est modifiable par l'utilisateur.

On a représenté ici, outre l'application 100 et la carte à microcircuit 300, également le lecteur physique 220 et son pilote 210.

Dans ce mode de réalisation, comme cela est représenté en figure 4, le micro-logiciel du lecteur physique 220 contient deux variables booléennes, notées *enable_transparence* et *enable_semi_transparence.* Ces deux variables booléennes sont mises à jour par l'application 100, en fonction de l'utilisation qui est souhaitée du lecteur de carte à microcircuit. Leurs valeurs sont ensuite constantes au cours d'une séquence comprenant une phase d'initialisation et une phase d'échange de données.

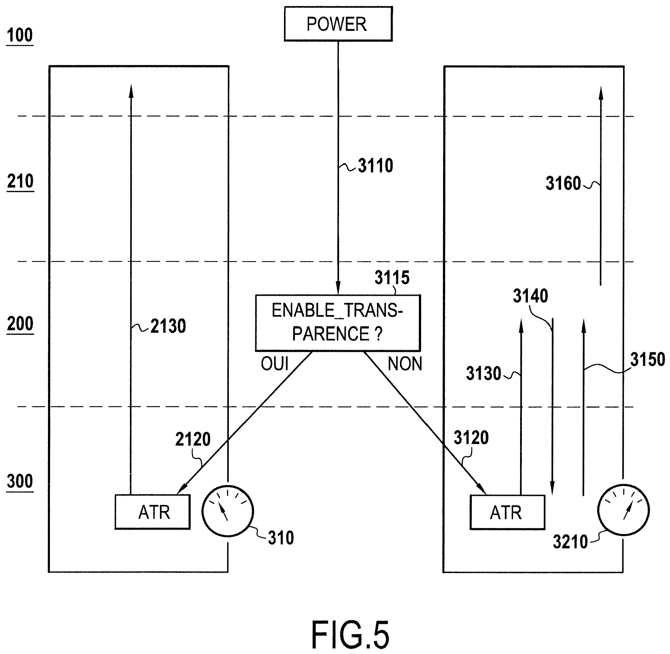

En figure 5, on a représenté la phase d'initialisation d'un procédé de communication selon l'invention mise en oeuvre dans le mode de réalisation particulier décrit.

Cette phase d'initialisation débute par une étape de commande de mise sous tension 3110 effectuée par l'application 100. Le lecteur physique 220 étudie ensuite si la valeur de la variable booléenne *enable_transparence* est égale à la valeur OUI ou à la valeur NON. Il effectue ainsi une étape de test 3115.

Si la variable booléenne *enable_transparence* est égale à la valeur OUI, le lecteur physique 220 et son pilote 210 se comportent suivant le mode transparent décrit précédemment, jusqu'à la fin de la phase d'initialisation. En particulier, le message de réponse à réinitialisation émis par la carte 300 au cours d'une étape de réponse à réinitialisation 2130 « ATR » est transmis directement et sans analyse à l'application 100. Aucune vitesse n'est négociée, et la suite de la communication va s'effectuer à la vitesse minimale 310.

Si, au contraire, la variable booléenne *enable_transparence* est égale à la valeur NON, le lecteur physique 220 et son pilote 210 se comportent jusqu'à la fin de la phase d'initialisation selon le mode de communication conforme à la norme ISO 7816-3. En particulier, à la suite d'une étape de commande de réinitialisation 3120, la carte 300 effectue une étape de réponse à réinitialisation « ATR » 3130 et le lecteur 220 et son pilote 210 ne transmettent immédiatement pas le contenu de la réponse « ATR » à l'application 100. Ils recherchent dans cette réponse à réinitialisation l'indication par la carte de la possibilité dont elle dispose de communiquer à une vitesse supérieure à la vitesse minimale 310. Dans le cas où la carte a effectivement indiqué qu'elle était capable de communiquer à une vitesse supérieure à la vitesse 310, le lecteur 220 engage avec la carte 300 un processus de négociation comprenant différentes étapes 3140 et 3150 d'échanges aboutissant à la détermination d'une vitesse de communication négociée 3210. Une fois la négociation terminée, la réponse « ATR » est transmise à l'application 100 au cours de l'étape 3160.

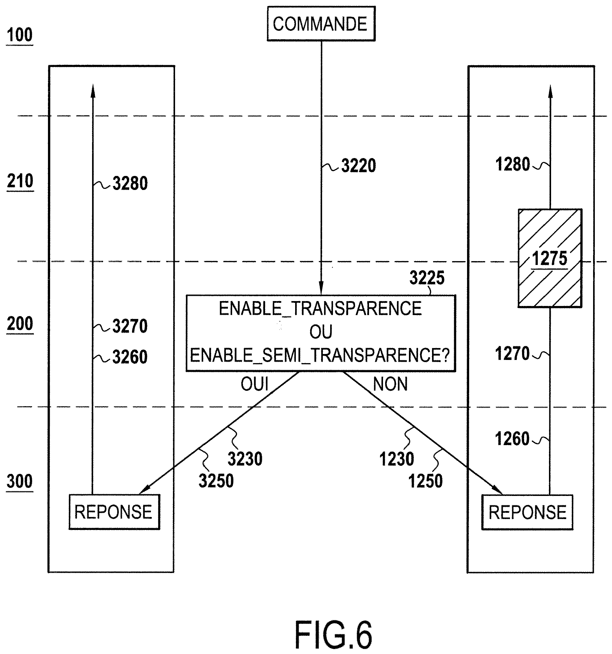

En figure 6, on a représenté la phase d'échange de données mise en oeuvre à la suite de la phase d'initialisation de la figure 5. Le processus commence par une étape de commande 3220, au cours de laquelle l'application 100 transmet au lecteur physique 220 via son pilote 210 une commande, par exemple une commande d'exécution d'un algorithme de cryptographie asymétrique, comme une commande RSA 1024 bits. Le lecteur physique 220 examine alors si l'une des variables booléennes *enable_transparence* ou *enable_semi_transparence* est à la valeur OUI. Il effectue ainsi une étape de test 3225.

Si l'une des variables est à la valeur OUI, le lecteur fonctionne pendant la suite de la phase d'échange de données dans le mode transparent. En particulier, après la réception de la commande, au cours des étapes 3230 et 3250, la carte 300 renvoie des octets de protocole et donne sa réponse au lecteur physique 220, au cours d'étapes 3260 et 3270. Le lecteur 220 et son pilote 210 fonctionnant en mode transparent, les octets de protocole et la réponse à la commande sont entièrement et directement transmis à l'application 100, sans être analysés par le lecteur.

A l'inverse, si ni la variable *enable_transparence,* ni la variable *enable_semi_transparence* n'est à la valeur OUI, alors le lecteur physique 220 et son pilote 210 fonctionnent pendant le reste de la phase d'échange de données dans le mode défini par la norme ISO 7816-3. Cela implique que chacune des séquences d'octets transmise par la carte 300 au lecteur physique 220 est analysée et filtrée avant d'être renvoyée à l'application 100, dans la mesure où le protocole de la norme ISO 7816-3 le permet. La fonction de filtre est représentée par la référence 1275 en figure 6. Ainsi, en particulier seules les réponses de longueur conforme sont transmises, et ni les réponses de longueur non conforme, ni les octets de protocole transmis au cours d'une étape 1260 ne sont transmis à l'application 100. Les données transmises le sont au cours d'une étape d'émission de réponse à commande 1270.

En référence aux figures 7 à 9, on a représenté un deuxième mode de réalisation particulier de l'invention, mettant en oeuvre un lecteur de carte 220 commercial, par exemple un lecteur de type MP 60. Un tel lecteur prend en charge la communication selon différents protocoles, et dispose d'une interface de programmation permettant à l'utilisateur programmeur de modifier différents paramètres de la norme ISO 7816-3.

Comme cela est représenté en figure 7, dans ce mode de réalisation, des variables *enable_transparence* et *enable_semi_transparence* sont mises en place dans la mémoire de l'ordinateur sur lequel est mis en oeuvre le pilote 210. Ces variables booléennes sont mises à jour en fonction du mode de communication souhaitée.

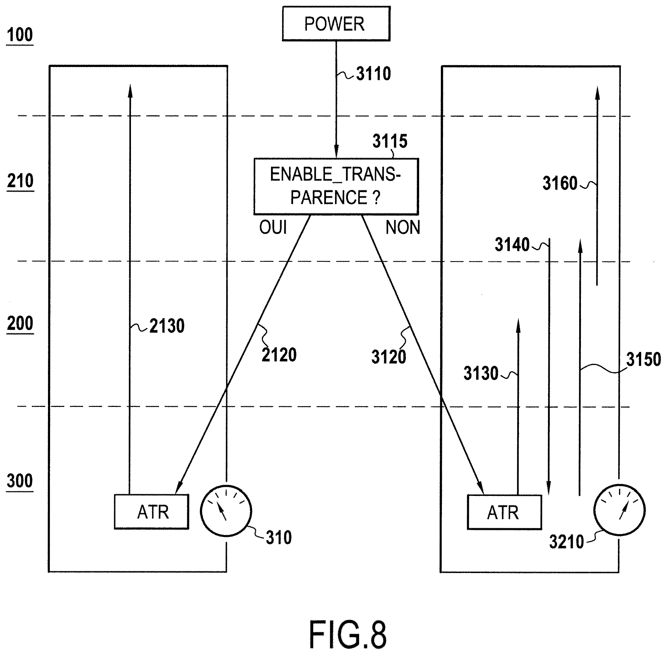

En référence à la figure 8, la phase d'initialisation débute par une étape de commande de mise sous tension transmise de l'application vers le lecteur de carte. Le pilote du lecteur 210 étudie en réponse à la réception de cette commande de mise sous tension la valeur de la variable *enable_transparence.* Il effectue ainsi une étape de test 3155. Si la valeur est égale à OUI, le lecteur 220 et son pilote 210 fonctionnent pour la suite de la phase d'initialisation dans le mode transparent. En particulier, en réponse à une étape de commande de réinitialisation 2220, la carte 300 émet une réponse à réinitialisation « ATR » au cours d'une étape 2130, mais toutes les données de cette réponse sont entièrement transmises à l'application 100 sans être analysées, ni filtrées par le lecteur 220 et son pilote 210. Aucune vitesse n'est négociée, et la suite de la communication va s'effectuer à la vitesse minimale 310.

Dans le cas contraire, la variable *enab*/*e_transparence* étant égale à NON, le lecteur 220 et son pilote 210 fonctionnent pendant la suite de la phase d'initialisation dans le mode de communication défini par la norme ISO 7816-3. En particulier, le lecteur adresse à la carte une commande de réinitialisation au cours d'une étape 3120 et le lecteur réagit en effectuant une étape de réponse à réinitialisation « ATR » 3130. Le lecteur ne transmet pas immédiatement la réponse à l'application 100, analyse son contenu, et recherche notamment si la carte 300 a indiqué qu'elle était capable d'utiliser une vitesse de communication accélérée.

Si tel est le cas, le pilote 210 du lecteur de carte engage une phase de négociation avec la carte 300, comprenant des étapes d'échange 3140 et 3150, afin de déterminer une vitesse de communication 3210 supérieure à la vitesse minimale 310. Ce processus de négociation comprend notamment l'indication par le pilote à la carte de la vitesse de communication propre du lecteur au cours d'une étape 3140, puis, au cours d'une étape 3150, l'indication par la carte au pilote de sa vitesse de communication à elle. Le pilote, analysant la réponse de la carte, modifie ensuite la vitesse de communication effective du lecteur de manière à ce que cette dernière soit la vitesse de communication négociée 3120, commune à la carte et au lecteur. Une fois la négociation terminée, la réponse « ATR » est transmise à l'application au cours d'une étape 3160.

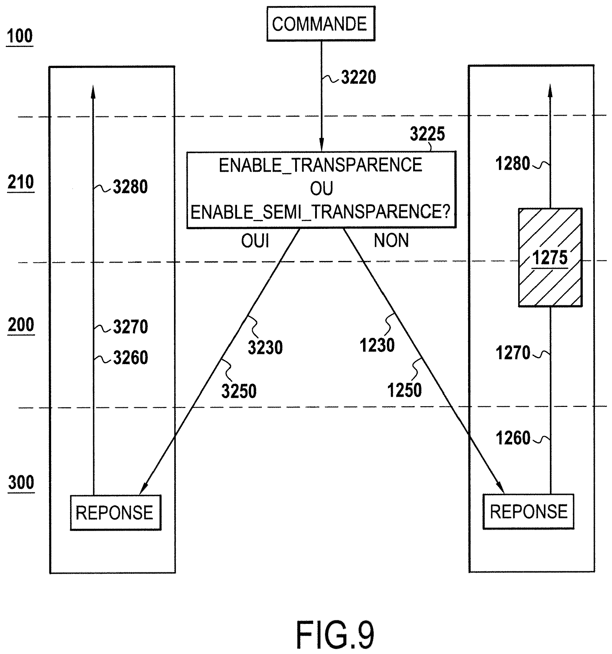

En figure 9, on a représenté la phase d'échange de données consécutive à la phase d'initialisation de la figure 8. Ceci débute par une étape de commande 3220, au cours de laquelle l'application 100 transmet une commande au lecteur de carte, par exemple une commande RSA 1024 bits. En réaction à la réception de cette commande, le pilote 210 examine si l'une des variables booléennes *enable_transparence* ou *enable_semi_transparence* est égale à la valeur OUI. Il effectue ainsi une étape de test 3225.

Si l'une des variables est égale à la valeur OUI, la suite de la phase d'échange de données s'effectue en mode transparent. En particulier, après les étapes 3230 et 3250 d'envoi d'en-tête et d'envoi du corps de la commande, la carte 300 transmet des octets de protocole et sa réponse à la commande, mais celle-ci n'est pas analysée, ni filtrée par le lecteur 220 ou son pilote 210, et l'ensemble des données est transmis directement à l'application 100.

A l'inverse, si les deux variables booléennes *enable_transparence* et *enable semi_transparence* sont à la valeur NON, alors la phase d'échange de données s'effectue selon le protocole défini par la norme ISO 7816-3. En particulier, après la transmission par le lecteur de l'en-tête et du corps de la commande au cours d'étapes 1230 et 1250, la carte 300 transmet des octets de protocole au cours d'une étape 1260 mais ces octets de protocole sont filtrés par le lecteur 220 et son pilote 210 de telle sorte qu'ils ne sont pas transmis à l'application 100. La fonction de filtre est représentée en référence 1275. De même, la carte émet, au cours d'une étape 1270 sa réponse à la commande, et le lecteur 220 et son pilote 210 analysent et filtrent cette commande de telle sorte que seules des commandes conformes à la norme ISO 7816-3 sont transmises à l'application 100.

Pour le composant Samsung S3FS91J, le gain de vitesse entre une communication à la vitesse minimale 310 et une vitesse de communication négociée 3210 peut être de 23. En effet, l'émission d'un bit sur la ligne d'entrée/sortie de l'interface ISO 7816 peut être accélérée jusqu'à ne durer que 16 cycles, alors que si la vitesse est maintenue à la vitesse minimale 310, une telle émission dure 372 cycles.

Il en résulte que l'émission d'un octet, avec une fréquence d'horloge externe de 4 MHz, dure 48 µs pour une communication négociée à la vitesse maximale, et 1,1 ms pour une communication non négociée.

Dans le cadre d'un procédé de caractérisation sécuritaire d'une carte à microcircuit, on envoie à la carte des commandes RSA de 1024 bits, dont la longueur est de 128 octets et on reçoit en retour une signature de même longueur. L'exécution de la commande elle-même dure 100 ms. La commande APDU envoyée avec la commande comprend quant à elle 5 octets. Il en résulte que le processus dure 389 ms pour une communication non négociée, et 113 ms pour une communication négociée. Le rapport des durées entre les deux modes est donc de 3,5. Cela permet de réaliser 3,5 fois plus d'attaques par injection de fautes au cours d'un processus de caractérisation sécuritaire de durée donnée utilisant l'invention, ce qui constitue un gain important.

Selon une variante de l'invention, le résultat du test 3115 est conservé de telle manière que le test 3225 n'est réalisé que si le test 3115 a donné une réponse négative. Dans ce cas, le test 3225 ne comporte que l'examen de la valeur de la variable *enable_semi_transparence.* Si le test 3115 a donné une réponse positive, ou si le test 3225 a donné une réponse positive, la phase d'échange de données est effectuée sans analyse et sans filtrage des réponses à commande, ou dans une variante, des commandes et des réponses à commande. Si les deux tests ont donné une réponse négative, la communication s'effectue selon la norme 7816-3.

Selon des variantes de l'invention, la phase d'initialisation peut être suivie de plusieurs échanges de données, chaque échange comprenant l'émission d'une commande par l'application, sa transmission par le lecteur, son traitement par la carte et l'émission par la carte de sa réponse à la commande. Dans une variante de l'invention, l'application 100 modifie les valeurs des variables *enable_transparence* et *enable_semi_transparence* entre la phase d'initialisation et la phase d'échange de données, ou entre l'émission de deux commandes au cours d'une phase d'échange de données comprenant l'émission et le traitement de plusieurs commandes.

L'invention peut être mise en oeuvre avec une entité électronique portable de structure différente de celle d'une carte à microcircuit, comme une carte SD ou une clé USB. Le lecteur est alors remplacé par une interface spécifique à ces formats et normes.

## Revendications

1. Procédé de caractérisation sécuritaire d'une carte à microcircuit, ledit procédé comprenant une communication selon un procédé de communication entre une carte à microcircuit (300) et une application informatique (100) exécutée par un hôte par l'intermédiaire d'une interface (200), comprenant une étape (3100) d'initialisation de la communication, puis une étape (3200) d'échange de données entre la carte à microcircuit et l'application, **caractérisé en ce qu'**au cours de l'étape d'initialisation (3100), il est procédé entre la carte à microcircuit et l'interface, si la carte à microcircuit le permet, à une négociation (3140, 3150) d'une vitesse de communication (3210) supérieure à une vitesse de communication minimale, et **en ce qu'**au cours de l'étape d'échange de données l'interface transmet à l'application toutes les données que ladite interface reçoit (3260, 3270) en provenance de la carte à microcircuit, cette transmission étant effectuée indépendamment de la conformité desdites données à une norme de communication entre la carte à microcircuit et l'interface, et à la vitesse de communication (3210) issue de ladite négociation,
dans lequel au cours de l'étape d'échange :
• la carte à microcircuit (300) traite une commande provenant de l'application (100) puis envoie une réponse à destination de l'interface (200),
• l'interface introduit la réponse dans une mémoire tampon (201) sans analyse, puis, une fois qu'une période paramétrable est écoulée, au cours de laquelle l'interface (200) n'a rien reçu de la carte à microcircuit (300), transmet l'intégralité du contenu de la mémoire tampon (201) à l'application (100).

2. Procédé de caractérisation sécuritaire selon la revendication 1, dans lequel ladite négociation (3140, 3150) entre la carte à microcircuit et l'interface est une sélection de protocoles et paramètres conforme à une norme.

3. Procédé de caractérisation sécuritaire selon la revendication 1 ou 2, comprenant une attaque par injection de fautes.

4. Procédé de caractérisation sécuritaire selon l'une des revendications 1 à 3, comprenant l'envoi (3230, 3250) par l'interface à la carte à microcircuit d'une commande d'exécution d'un algorithme de cryptographie asymétrique, par exemple une commande RSA 1024 bits.

5. Lecteur (220) de carte à microcircuit, pour caractérisation sécuritaire d'une carte à microcircuit, disposant d'un mode de fonctionnement dans lequel il effectue, en réaction à une demande d'une application informatique, une étape d'initialisation de la communication avec la carte à microcircuit, puis une étape d'échange de données entre la carte à microcircuit et l'application informatique, **caractérisé en ce que** dans ledit mode, il est procédé entre la carte à microcircuit et le lecteur, au cours de l'étape d'initialisation et si la carte à microcircuit le permet, à une négociation d'une vitesse de communication, et **en ce qu'**au cours de l'étape d'échange de données le lecteur transmet à l'application toutes les données que ledit lecteur reçoit de la carte à microcircuit, cette transmission étant effectuée indépendamment de la conformité desdites données à une norme de communication entre la carte à microcircuit et le lecteur, et à la vitesse issue de ladite négociation
dans lequel au cours de l'étape d'échange :
• la carte à microcircuit (300) traite une commande provenant de l'application (100) puis envoie une réponse à destination du lecteur (200),
• le lecteur introduit la réponse dans une mémoire tampon (201) sans analyse, puis, une fois qu'une période paramétrable est écoulée, au cours de laquelle le lecteur (200) n'a rien reçu de la carte à microcircuit (300), transmet l'intégralité du contenu de la mémoire tampon (201) à l'application (100).

6. Lecteur selon la revendication 5, dans lequel la valeur d'une variable enregistrée dans le lecteur détermine si le lecteur fonctionne ou non dans ledit mode.

7. Lecteur selon la revendication 6, dans lequel la variable est enregistrée dans un micro-logiciel du lecteur.

8. Programme informatique (210) pouvant être chargé sur un appareil programmable et pour caractérisation sécuritaire d'une carte à microcircuit, permettant alors une communication entre ledit appareil programmable et la carte à microcircuit, comportant une série d'instructions qui permettent à la communication d'être effectuée dans un mode dans lequel il est effectué, en réaction à une demande d'une application informatique, une étape d'initialisation de communication avec la carte à microcircuit, puis une étape d'échange de données entre la carte à microcircuit et l'application informatique, **caractérisé en ce que** dans ledit mode, il est procédé, au cours de l'étape d'initialisation et si la carte à microcircuit le permet, à une négociation d'une vitesse de communication, et **en ce qu'**au cours de l'étape d'échange de données, toutes les données reçues de la carte à microcircuit sont transmises à l'application, cette transmission étant effectuée indépendamment de la conformité desdites données une norme de communication entre la carte à microcircuit et l'appareil programmable, et à la vitesse issue de ladite négociation
dans lequel au cours de l'étape d'échange :
• la carte à microcircuit (300) traite une commande provenant de l'application (100) puis envoie une réponse à destination de l'appareil programmable,
• l'appareil programmable introduit la réponse dans une mémoire tampon (201) sans analyse, puis, une fois qu'une période paramétrable est écoulée, au cours de laquelle l'appareil programmable n'a rien reçu de la carte à microcircuit (300), transmet l'intégralité du contenu de la mémoire tampon (201) à l'application (100).

9. Programme informatique selon la revendication 8, dont la série d'instructions permet également la mémorisation par l'appareil programmable d'une variable dont la valeur détermine si la communication se fait ou non dans ledit mode.

10. Programme informatique selon la revendication 8 ou la revendication 9, programmé via une interface de programmation pour que la communication puisse se faire suivant ledit mode.

## Patentansprüche

1. Verfahren zur Sicherungskennzeichnung einer Mikroschaltungskarte, wobei das Verfahren eine Kommunikation gemäß einem Kommunikationsverfahren zwischen einer Mikroschaltungskarte (300) und einer Computeranwendung (100), die von einem Host über eine Schnittstelle (200) ausgeführt wird, aufweist, umfassend einen Initialisierungsschritt (3100) der Kommunikation und dann einen Schritt (3200) des Datenaustauschs zwischen der Mikroschaltungskarte und der Anwendung, **dadurch gekennzeichnet, dass** während des Initialisierungsschritts (3100) zwischen der Mikroschaltungskarte und der Schnittstelle, wenn die Mikroschaltungskarte es erlaubt, eine Verhandlung (3140, 3150) einer Kommunikationsgeschwindigkeit (3210) aufgenommen wird, die höher als eine minimale Kommunikationsgeschwindigkeit ist, und dadurch, dass die Schnittstelle bei dem Schritt des Datenaustauschs alle Daten, die die Schnittstelle (3260, 3270) von der Mikroschaltungskarte empfängt, an die Anwendung überträgt, wobei dieses Übertragen unabhängig von der Übereinstimmung der Daten mit einem Kommunikationsstandard zwischen der Mikroschaltungskarte und der Schnittstelle und mit der Kommunikationsgeschwindigkeit (3210), die sich aus der Verhandlung ergibt, durchgeführt wird,
wobei bei dem Schritt des Austauschs:
• die Mikroschaltungskarte (300) einen Befehl bearbeitet, der von der Anwendung (100) kommt, und dann eine Antwort an die Schnittstelle (200) sendet,
• die Schnittstelle die Antwort ohne Analyse in einen Pufferspeicher (201) eingibt und dann, nachdem eine parametrierbare Periode abgelaufen ist, während der die Schnittstelle (200) von der Mikroschaltungskarte (300) nichts empfangen hat, den gesamten Inhalt des Pufferspeichers (201) an die Anwendung (100) überträgt.

2. Verfahren zur Sicherungskennzeichnung gemäß Anspruch 1, wobei die Verhandlung (3140, 3150) zwischen der Mikroschaltungskarte und der Schnittstelle eine Auswahl von Protokollen und Parametern in Übereinstimmung mit einem Standard ist.

3. Verfahren zur Sicherungskennzeichnung gemäß Anspruch 1 oder 2, umfassend einen Angriff durch Fehlerinjektion.

4. Verfahren zur Sicherungskennzeichnung gemäß einem der Ansprüche 1 bis 3, umfassend das Senden (3230, 3250) eines Befehls zum Ausführen eines asymmetrischen Kryptographiealgorithmus, beispielsweise eines 1024-Bit-RSA-Befehls, durch die Schnittstelle an die Mikroschaltungskarte.

5. Leser (220) einer Mikroschaltungskarte zur Sicherungskennzeichnung einer Mikroschaltungskarte, der über einen Betriebsmodus verfügt, bei dem er als Antwort auf eine Anfrage einer Computeranwendung einen Initialisierungsschritt der Kommunikation mit der Mikroschaltungskarte und dann einen Schritt des Datenaustauschs zwischen der Mikroschaltungskarte und der Computeranwendung durchführt, **dadurch gekennzeichnet, dass** in diesem Modus zwischen der Mikroschaltungskarte und dem Leser während des Initialisierungsschritts, wenn die Mikroschaltungskarte es erlaubt, eine Verhandlung einer Kommunikationsgeschwindigkeit aufgenommen wird, und dadurch, dass der Leser bei dem Schritt des Datenaustauschs alle Daten, die der Leser von der Mikroschaltungskarte empfängt, an die Anwendung überträgt, wobei dieses Übertragen unabhängig von der Übereinstimmung der Daten mit einem Kommunikationsstandard zwischen der Mikroschaltungskarte und dem Leser und mit der Geschwindigkeit, die sich aus der Verhandlung ergibt, durchgeführt wird,
wobei bei dem Schritt des Austauschs:
• die Mikroschaltungskarte (300) einen Befehl bearbeitet, der von der Anwendung (100) kommt, und dann eine Antwort an den Leser (200) sendet,
• der Leser die Antwort ohne Analyse in einen Pufferspeicher (201) eingibt und dann, nachdem eine parametrierbare Periode abgelaufen ist, während der der Leser (200) von der Mikroschaltungskarte (300) nichts empfangen hat, den gesamten Inhalt des Pufferspeichers (201) an die Anwendung (100) überträgt.

6. Leser gemäß Anspruch 5, wobei der Wert einer Variablen, die in dem Leser abgespeichert ist, bestimmt, ob der Leser in dem Modus funktioniert oder nicht.

7. Leser gemäß Anspruch 6, wobei der Wert in der Firmware des Lesers abgespeichert ist.

8. Computerprogramm (210), das auf ein programmierbares Gerät geladen werden kann, und zur Sicherungskennzeichnung einer Mikroschaltungskarte, das dann eine Kommunikation zwischen dem programmierbaren Gerät und der Mikroschaltungskarte ermöglicht, umfassend eine Reihe von Anweisungen, die ermöglichen, dass die Kommunikation in einem Modus durchgeführt wird, in dem als Antwort auf eine Anfrage einer Computeranwendung ein Initialisierungsschritt der Kommunikation mit der Mikroschaltungskarte und dann ein Schritt des Datenaustauschs zwischen der Mikroschaltungskarte und der Computeranwendung durchgeführt wird, **dadurch gekennzeichnet, dass** in diesem Modus während des Initialisierungsschritts und wenn die Mikroschaltungskarte es erlaubt eine Verhandlung einer Kommunikationsgeschwindigkeit aufgenommen wird, und dadurch, dass bei dem Schritt des Datenaustauschs alle Daten, die von der Mikroschaltungskarte empfangen werden, an die Anwendung übertragen werden, wobei dieses Übertragen unabhängig von der Übereinstimmung der Daten mit einem Kommunikationsstandard zwischen der Mikroschaltungskarte und dem programmierbaren Gerät und mit der Geschwindigkeit der Verhandlung durchgeführt wird,
wobei bei dem Schritt des Austauschs:
• die Mikroschaltungskarte (300) einen Befehl bearbeitet, der von der Anwendung (100) kommt, und dann eine Antwort an das programmierbare Gerät sendet,
• das programmierbare Gerät die Antwort ohne Analyse in einen Pufferspeicher (201) eingibt und dann, nachdem eine parametrierbare Periode abgelaufen ist, während der das programmierbare Gerät von der Mikroschaltungskarte (300) nichts empfangen hat, den gesamten Inhalt des Pufferspeichers (201) an die Anwendung (100) überträgt.

9. Computerprogramm gemäß Anspruch 8, wovon die Reihe von Anweisungen auch das Speichern durch das programmierbare Gerät einer Variablen, deren Wert bestimmt, ob die Kommunikation in dem Modus erfolgen kann oder nicht, ermöglicht.

10. Computerprogramm gemäß Anspruch 8 oder 9, das über eine Programmierschnittstelle programmiert ist, damit die Kommunikation nach dem Modus erfolgen kann.

## Claims

1. A secure characterization method of a microcircuit card, said method comprising communication according to a communication method between a microcircuit card (300) and a computer application (100) executed by a host by means of an interface (200), comprising a step (3100) for initialization of communication, then a data-exchange step (3200) between the microcircuit card and the application, **characterized in that,** during the initialization step (3100), if the microcircuit card allows, (3100), negotiation (3140, 3150) of a communication speed (3210) greater than a minimum communication speed is performed between the microcircuit card and the interface, and **in that** during the data-exchange step, the interface transmits to the application all the data that said interface receives (3260, 3270) originating from the microcircuit card, this transmission being executed independently of the conformity of said data with a communication standard between the microcircuit card and the interface, and with the communication speed (3210) resulting from said negotiation,
wherein during the exchange step:
• the microcircuit card (300) processes a command coming from the application (100) then sends a response to the interface (200),
• the interface introduces the response into a buffer memory (201) without analysis, then, once a configurable period has elapsed, during which the interface (200) has received nothing from the microcircuit card (300), transmits the entire content of the buffer memory (201) to the application (100).

2. The secure characterization method according to claim 1, wherein said negotiation (3140, 3150) between the microcircuit card and the interface is a selection of protocols and parameters conforming with a standard.

3. The secure characterization method according to claim 1 or 2, comprising a fault injection attack.

4. The secure characterization method according to one of claims 1 to 3, comprising sending (3230, 3250), by the interface to the microcircuit card, a command for execution of an asymmetrical cryptography algorithm, for example a 1024-bit RSA command.

5. A microcircuit card reader (220), for secure characterization of a microcircuit card, having an operating mode in which, in reaction to a request from a computer application, it conducts an initialization step of communication with the microcircuit card, then a data-exchange step between the microcircuit card and the computer application, **characterized in that** during the initialization step and if the microcircuit card allows, in said mode negotiation of a communication speed is performed between the microcircuit card and the reader, and **in that** during the data-exchange step the reader transmits to the application all the data said reader receives from the microcircuit card, this transmission being performed independently of the conformity of said data at a communication standard between the microcircuit card and the reader, and at the speed resulting from said negotiation
wherein during the exchange step:
• the microcircuit card (300) processes a command originating from the application (100) then sends a response to the reader (200),
• the reader introduces the response into a buffer memory (201) without analysis, then once a configurable period has elapsed, during which the reader (200) has received nothing from the microcircuit card (300), transmits the entire content of the buffer memory (201) to the application (100).

6. The reader according to claim 5, wherein the value of a variable recorded in the reader determines if the reader is operating or not in said mode.

7. The reader according to claim 6, wherein the variable is recorded in micro-software of the reader.

8. A computer program (210) which can be loaded onto a programmable apparatus and for secure characterization of a microcircuit card, then enabling communication between said programmable apparatus and the microcircuit card, including a series of instructions allowing the communication to be performed in a mode in which, in reaction to a request from a computer application, a communication initialization step is performed with the microcircuit card, then a data-exchange step between the microcircuit card and the computer application is performed, **characterized in that** in said mode, during the initialization step and if the microcircuit card allows, negotiation of a communication speed is carried out, **and in that** during the data-exchange step, all the data received from the microcircuit card are transmitted to the application, this transmission being performed independently of the conformity of said data with a communication standard between the microcircuit card and the programmable apparatus, and with the speed resulting from said negotiation
wherein during the exchange step:
• the microcircuit card (300) processes a command originating from the application (100) then sends a response to the programmable apparatus,
• the programmable apparatus introduces the response into a buffer memory (201) without analysis, then, once a configurable period has elapsed, during which the programmable apparatus has received nothing from the microcircuit card (300), transmits the entire content of the buffer memory (201) to the application (100).

9. The computer program according to claim 8, whereof the series of instructions also allows storing by the programmable apparatus of a variable whose value determines whether communication takes place or not in said mode.

10. The computer program according to claim 8 or claim 9, programmed via a programming interface so that communication can take place according to said mode.
